Europäisches Patentamt

European Patent Office

Office européen des brevets

(19)

(11) Numéro de publication : **0 196 557 B1**

(12) **FASCICULE DE BREVET EUROPÉEN**

(45) Date de publication du fascicule du brevet :
15.03.89

(21) Numéro de dépôt : 86103775.2

(22) Date de dépôt : 20.03.86

(51) Int. Cl.⁴ : **F 16 L 27/08**, F 16 L 57/00,
E 21 B 33/038,
E 21 B 33/035

(54) Dispositif de raccordement étanche de deux tronçons d'un conduit de fluide.

(30) Priorité : 22.03.85 FR 8504303

(43) Date de publication de la demande :
08.10.86 Bulletin 86/41

(45) Mention de la délivrance du brevet :
15.03.89 Bulletin 89/11

(84) Etats contractants désignés :
DE FR GB IT NL

(56) Documents cités :
DE--B-- 1 212 017
FR--A-- 2 506 424
US--A-- 3 768 839

(73) Titulaire : **ALSTHOM**
38, avenue Kléber
F-75784 Paris Cédex 16 (FR)

(72) Inventeur : **Rodriguez, Francis**
4, rue de la Boissière
F-44120 Vertou (FR)
Inventeur : **Roblin, Jean-Paul**
7, rue Henri Jullin
F-44300 Nantes (FR)

(74) Mandataire : **Weinmiller, Jürgen et al**
Lennéstrasse 9 Postfach 24
D-8133 Feldafing (DE)

## Description

La présente invention concerne un dispositif de raccordement étanche de deux tronçons d'un conduit de fluide du type comprenant un embout mâle cylindrique, pourvu d'un canal axial débouchant à l'extérieur par un trou radial, ledit canal constituant ledit premier tronçon de conduit, ledit embout étant destiné à pénétrer dans un alésage usiné dans une pièce de réception de l'embout, ledit deuxième tronçon de conduit étant réalisé dans ladite pièce de réception et aboutissant dans ledit alésage, l'orifice d'aboutissement étant situé, en fin de pénétration de l'embout mâle, au niveau dudit trou radial (p. ex. DE-B-1212017).

Dans les dispositifs de raccordement de ce type, l'étanchéité du conduit est assurée, au niveau du raccordement, par deux joints disposés dans des gorges de l'embout mâle, réalisées de part et d'autre dudit trou radial.

Au moment du raccordement des deux tronçons, l'embout mâle pénètre dans l'alésage or, les joints, pour assurer leur fonction, ont nécessairement un diamètre extérieur supérieur à celui de l'alésage, il s'ensuit un grand risque de déchirement au moment de l'entrée des joints dans l'alésage. Pour limiter ce risque, on prévoit généralement un chanfrein à l'entrée de l'alésage et on introduit l'embout mâle délicatement et coaxialement.

Cependant, les conditions d'exécution du raccordement ne permettent pas toujours de réaliser l'opération de raccordement avec ces précautions, c'est le cas notamment dans des raccordements hydrauliques pour des installations sous-marines.

La présente invention a pour but d'éliminer un tel risque.

L'invention a ainsi pour objet un dispositif de raccordement étanche de deux tronçons d'un conduit de fluide du type comprenant un embout mâle cylindrique pourvu d'un canal axial débouchant à l'extérieur par un trou radial, ledit canal constituant ledit premier tronçon de conduit, ledit embout étant destiné à pénétrer dans un alésage usiné dans une pièce de réception de l'embout, ledit deuxième tronçon de conduit étant réalisé dans ladite pièce de réception et aboutissant dans ledit alésage, l'orifice d'aboutissement étant situé, en fin de pénétration de l'embout mâle, au niveau dudit trou radial, ledit embout mâle étant muni de deux joints annulaires situés respectivement de part et d'autre dudit trou radial, caractérisé en ce que le joint le plus éloigné de l'extrémité de l'embout, appelé joint supérieur, est axialement logé entre un épaulement de l'embout et une bague annulaire coulissante montée sur l'embout et percée d'une lumière radiale, l'autre joint, appelé joint inférieur, étant axialement logé entre ladite bague et un manchon coulissant monté sur l'extrémité de l'embout, en ce que ledit alésage comporte un épaulement d'arrêt dudit manchon coulissant au cours de la pénétration de l'embout dans l'alésage, en ce que les parois respectives en contact avec le joint supérieur et avec le joint inférieur coopèrent avec les joints de telle sorte que leur compression par le coulissement axial dudit manchon, lors de son arrêt par ledit épaulement de l'alésage et la poursuite de la pénétration de l'embout dans l'alésage, provoquent l'expansion radiale desdits joints de manière à les plaquer contre la paroi dudit alésage et en ce que lesdits joints, en état non comprimés, ont un diamètre extérieur très légèrement inférieur au diamètre dudit alésage.

Selon une réalisation préférée de l'invention, lesdits joints sont protégés, avant la pénétration de l'embout mâle dans ledit alésage, par un fourreau poussé par des moyens élastiques vers ledit manchon coulissant.

Selon une réalisation particulière préférée, ledit épaulement de l'embout constitue une surface conique d'appui dudit joint supérieur, la surface dudit manchon coulissant, en contact avec ledit joint inférieur, étant également conique, et l'extrémité inférieure dudit manchon coulissant comportant en outre un chanfrein conique de centrage.

L'invention va maintenant être décrite en référence au dessin annexé dans lequel :

La figure 1 représente, en demi-coupe axiale, un dispositif de raccordement étanche de deux tronçons d'un conduit de fluide selon l'invention, avant le raccordement.

La figure 2 montre en demi-coupe axiale, le même dispositif que la fig. 1 mais dans une phase proche du raccordement final.

La figure 3 montre le dispositif en position définitive de raccordement.

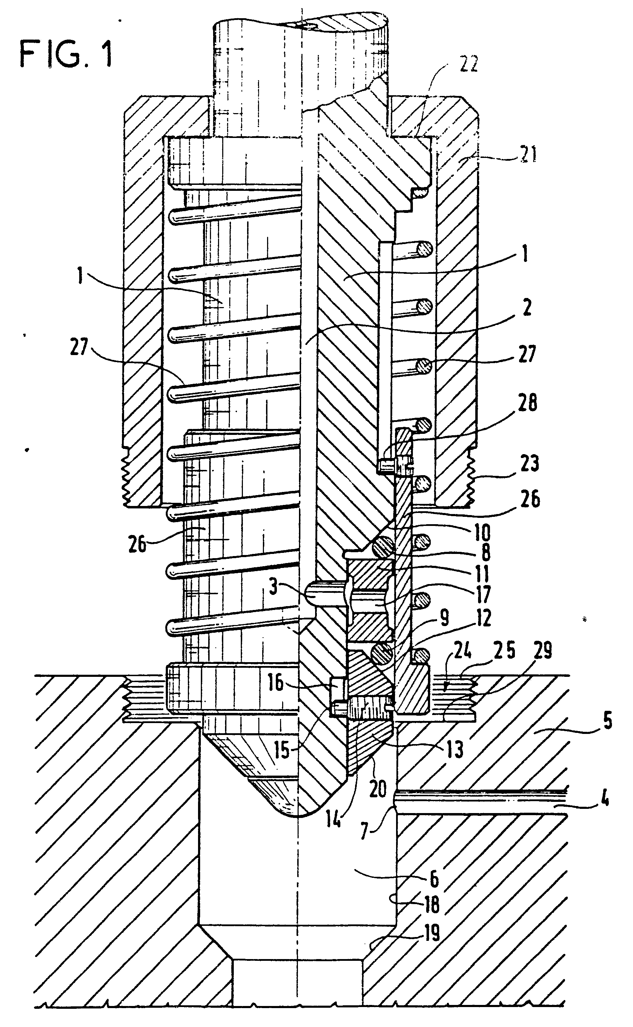

En se référant à la fig. 1, le dispositif de raccordement comprend un embout mâle cylindrique 1. Cet embout mâle est percé d'un canal axial 2 qui débouche à l'extérieur par un trou radial 3. Le canal axial 2 et le trou radial 3 constituent un premier tronçon de conduit à raccorder, d'une façon étanche, avec un deuxième tronçon de conduit 4 usiné dans une pièce 5 de réception de l'embout mâle 1.

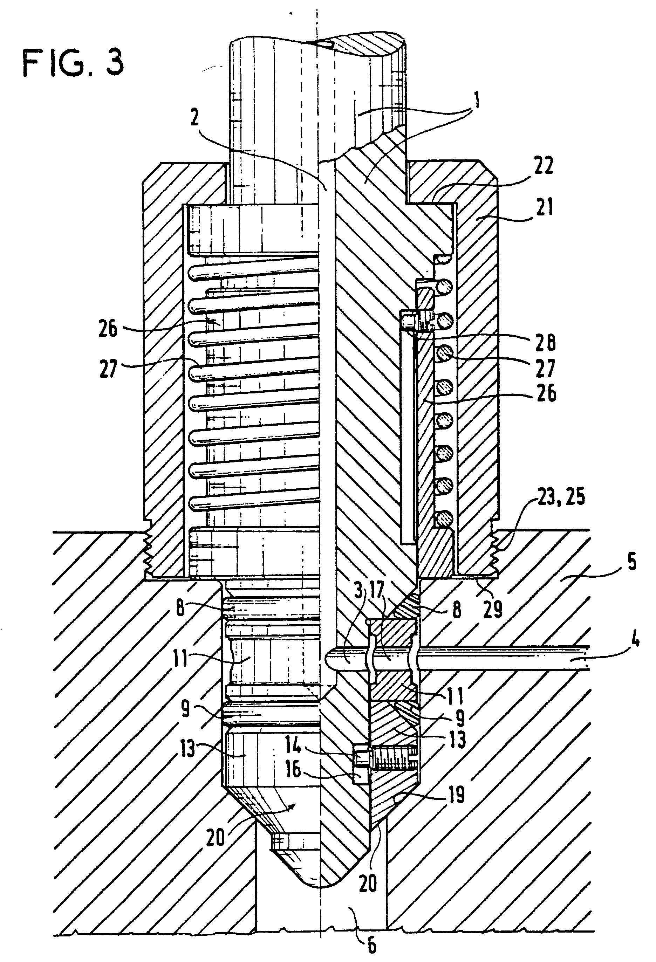

A cet effet, la pièce de réception 5 comporte un alésage 6 dans lequel aboutit le deuxième tronçon de conduit 4 et dans lequel l'embout mâle 1 doit pénétrer pour réaliser le raccordement étanche des deux tronçons de conduit. L'orifice d'aboutissement 7 du deuxième tronçon de conduit 4 dans l'alésage 6 est situé à un niveau tel qu'il soit en face du trou radial 3 en fin de pénétration de l'embout mâle 1 dans l'alésage 6 (voir fig. 3). Sur les figures, le deuxième tronçon de conduit 4 est représenté horizontal et rectiligne, ce qui n'est qu'un exemple mais n'est nullement nécessaire.

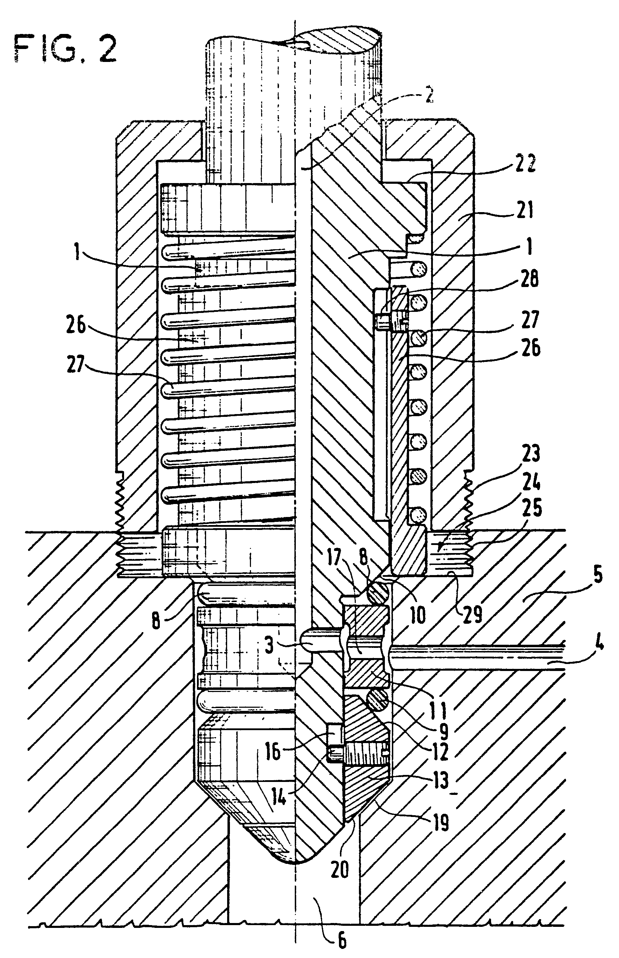

De part et d'autre du trou radial 3, l'embout mâle 1 est muni de deux joints ; un joint torique supérieur 8 et un joint torique inférieur 9. Le joint supérieur 8 est disposé axialement entre un épaulement conique 10 de l'embout mâle 1 et une bague annulaire coulissante 11 et le joint inférieur 9 est disposé axialement entre la bague annulaire coulissante 11 et une paroi conique 12 d'un manchon coulissant 13 monté sur l'extrémité de l'embout mâle 1. Le manchon coulissant 13 est muni d'une vis-butée 14 dont l'extrémité 15 est logée dans un logement oblong 16 de l'embout mâle 1 limitant la course vers le bas du manchon. Dans la position représentée sur la fig. 1, donc avant le raccordement, le manchon coulissant 13 est en position basse et les joints toriques ne sont pas, ou très faiblement comprimés. Dans cet état, leur diamètre extérieur est très légèrement inférieur à celui de l'alésage 6 de la pièce de réception 5 permettant ainsi la pénétration de l'embout mâle 1 sans endommager les joints, comme on le voit bien sur la fig. 2.

Afin de permettre la communication hydraulique des deux tronçons de conduit en fin de raccordement, la bague annulaire coulissante 11 est percée d'une lumière radiale 17.

Afin de permettre, au moment du raccordement, par la pénétration de l'embout mâle 1 dans l'alésage 6, le coulissement du manchon coulissant 13 vers le haut de manière à écraser les joints 8, 9 afin de réaliser l'étanchéité par extension radiale des joints et placage contre la paroi 18 de l'alésage 6, celui-ci est muni d'un épaulement 19 contre lequel vient buter et s'arrêter le manchon coulissant 13. Cet épaulement est conique et coopère avec un chanfrein conique 20 réalisé à la partie inférieure du manchon 12 réalisant ainsi un cône de centrage dans l'alésage 6. L'expansion radiale des joints 8 et 9 est réalisée grâce aux parois coniques 12 et 10.

La figure 3 montre le dispositif en position définitive, raccordée, les joints étant expansés radialement et plaqués contre la paroi 18 de l'alésage 6. Pour la fixation mécanique de l'embout mâle 1 sur la pièce de réception 5, l'embout mâle 1 est muni d'une virole 21 s'appuyant contre un épaulement 22 de l'embout mâle et comportant à son extrémité inférieure un filetage 23. La virole 21 vient ainsi en fin de raccordement, voir fig. 3, se visser à la partie supérieure de la pièce 5 dans un lamage 24 taraudé sur son pourtour externe 25.

Afin de protéger les joints 8 et 9 avant le raccordement, ceux-ci sont recouverts par un fourreau 26 poussé vers le bas, c'est-à-dire vers le manchon 13, en le recouvrant en partie, par un ressort 27. Une butée 28 retient le fourreau en position basse.

Lors de l'opération de raccordement, l'extrémité inférieure du fourreau prend appui contre le fond 29 du lamage 24 et coulisse ainsi vers le haut en dégageant les joints. La fig. 2 montre le dispositif dans une position intermédiaire où le manchon 13 est encore en position basse mais vient juste en butée contre l'épaulement 19. La poursuite de la descente de l'embout 1 provoque le coulissement vers le haut, par rapport à l'embout, du manchon 13 et comprime ainsi les joints 8 et 9 élastiques, expansant radialement ces joints grâce aux faces obliques 10 et 12. Durant cette opération, la bague 11 coulisse également. La fig. 3 montre la position définitive, les joints sont plaqués et la virole 21 a été vissée pour fixer l'ensemble. Les joints 8 et 9 sont par exemple en élastomère et sont déformés élastiquement.

Ainsi, grâce à l'invention, on voit que ces joints ne risquent plus, ne dépassant pas le diamètre de l'alésage 6, et même ne dépassant pas le diamètre extérieur du manchon coulissant 13, d'être endommagés lors de l'opération de raccordement. En outre, le fourreau 26 permet éventuellement de laisser l'embout mâle 1 suspendu un certain temps au-dessus de la pièce 5, avant le raccordement, sans craindre une éventuelle détérioration des joints par chocs ou éraflures de pièces voisines situées alentour. Une application particulière de l'invention consiste par exemple dans le raccordement de conduits de commande hydraulique de systèmes d'activation d'organes dans une installation de production pétrolière sous-marine. L'invention peut également avoir de nombreuses autres applications.

**Revendications**

1. Dispositif de raccordement étanche de deux tronçons d'un conduit de fluide du type comprenant un embout mâle cylindrique (1) pourvu d'un canal axial (2) débouchant à l'extérieur par un trou radial (3), ledit canal constituant ledit premier tronçon de conduit, ledit embout étant destiné à pénétrer dans un alésage (6) usiné dans une pièce de réception (5) de l'embout, ledit deuxième tronçon de conduit (4) étant réalisé dans ladite pièce de réception et aboutissant dans ledit alésage, l'orifice d'aboutissement (7) étant situé, en fin de pénétration de l'embout mâle, au niveau dudit trou radial, ledit embout mâle étant muni de deux joints annulaires (8, 9) situés respectivement de part et d'autre dudit trou radial, caractérisé en ce que le joint le plus éloigné de l'extrémité de l'embout, appelé joint supérieur (8), est axialement logé entre un épaulement (10) de l'embout et une bague annulaire coulissante (11) montée sur l'embout et percée d'une lumière radiale (17), l'autre joint, appelé joint inférieur (9), étant axialement logé entre ladite bague et un manchon coulissant (13) monté sur l'extrémité de l'embout, en ce que ledit alésage comporte un épaulement d'arrêt (19) dudit manchon coulissant au cours de la pénétration de l'embout dans l'alésage, en ce que les parois respectives en contact avec le joint supérieur et avec le joint inférieur coopèrent avec les joints de telle sorte que leur compression par le coulissement axial dudit manchon, lors de son arrêt par ledit épaulement de l'alésage et la poursuite de la pénétration de l'embout dans l'alésage, provoquent l'expansion radiale desdits joints, de manière à les plaquer contre la paroi dudit alésage et en ce que lesdits joints, en état non comprimés, ont un diamètre extérieur très légèrement inférieur au diamètre dudit alésage.

2. Dispositif de raccordement selon la revendication 1, caractérisé en ce que lesdits joints sont protégés, avant la pénétration de l'embout mâle dans ledit alésage, par un fourreau (26) poussé par des moyens élastiques (27) vers ledit manchon coulissant.

3. Dispositif selon l'une des revendications 1 ou 2, caractérisé en ce que ledit épaulement de l'embout mâle constitue une surface conique d'appui (10) dudit joint supérieur (8) et en ce que la surface (12) dudit manchon coulissant, en contact avec ledit joint inférieur (9), est également conique, l'extrémité inférieure dudit manchon coulissant comportant en outre un chanfrein conique (20) de centrage.

**Claims**

1. A tight coupling device for joining two sections of a fluid line, of the type comprising a cylindrical male ferrule (1) provided with an axial channel (2) issuing to the outside via a radial hole (3), said channel constituting said first line section, said ferrule being designed to fit into a bore (6) machined into a piece (5) for receiving the ferrule, said second line (4) being formed in the receiving piece and issuing into said bore, the issuing orifice (7) being situated at the level of said radial hole when the male ferrule has been fully inserted, said male ferrule being provided with two ring seals (8, 9) located on either side of said radial hole, characterized in that the seal further away from the end of the ferrule, termed the upper seal (8), is axially secured between a shoulder (10) of the ferrule and a sliding annular ring (11) mounted on the ferrule and having a radial throughhole (17), while the other seal, termed lower seal (9), is axially secured between said ring and a sliding sleeve (13) fitted over the end of the ferrule, that said bore comprises a shoulder (19) to stop said sliding sleeve in the course of the ferrule's penetrating the bore, that the walls respectively in contact with the upper seal and with the lower seal cooperate with the seals such that their compression by the axial sliding of said sleeve caused by its abutment against said bore shoulder (19) and the continuation of the ferrule's penetration into the bore provoke the radial expansion of said seals in order to apply them to the wall of said bore, and in that said seals, in the not compressed state, have an outside diameter which is only slightly smaller than the diameter of said bore.

2. A coupling device according to claim 1, characterized in that said seals are protected, prior to the male ferrule's insertion into said bore, by a bush (26) that is urged by elastic means (27) towards said sliding sleeve.

3. A device according to one of claims 1 or 2, characterized in that said shoulder (10) of the male ferrule forms a conical bearing surface for said upper seal (8), and that the surface (12) of said sliding sleeve in contact with said lower seal (9) is likewise conical, the lower end of said sliding sleeve being also provided with a conical chamfer (20) for centering purposes.

**Patentansprüche**

1. Vorrichtung zum dichten Anschluß zweier Abschnitte einer Fluidleitung, mit einem zylindrischen Ansatzstück (1), das mit einem den ersten Leitungsabschnitt bildenden axialen Kanal (2) versehen ist, welcher durch ein radiales Loch (3) nach außen mündet, und das in eine Bohrung (6) in einem Empfangsstück (5) für das Ansatzstück eindrigen kann, während der zweite Leitungsabschnitt (4) in dem Empfangsstück ausgebildet ist und in die Bohrung mündet, wobei die Mündungsöffnung (7) sich in Höhe des radialen Loches befindet, wenn das Ansatzstück ganz in das Empfangsstück eingeführt ist, wobei das Ansatzstück mit zwei Ringdichtungen (8, 9) versehen ist, die sich je auf einer Seite des radialen Lochs befinden, dadurch gekennzeichnet, daß die vom Ende des Ansatzstückes weiter entfernte Dichtung, genannt obere Dichtung (8), axial zwischen einer Schulter (10) des Ansatzstücks und einem gleitenden Ring (11) angeordnet ist, der auf dem Ansatzstück angeordnet und mit einer radialen Öffnung (17) versehen ist, und die andere Dichtung, genannt untere Dichtung (9), axial zwischen diesem Ring und einer gleitenden Muffe (13) liegt, die auf dem Ende des Ansatzstücks angeordnet ist, daß die Bohrung eine Arretierschulter (19) für die gleitende Muffe während des Eindringens des Ansatzes in die Bohrung aufweist, daß die Wände, die mit der oberen Dichtung bzw. der unteren Dichtung in Kontakt stehen, so mit den Dichtungen zusammenwirken, daß deren Zusammenpressen durch das axiale Gleiten der Muffe während ihrer Arretierung durch die Schulter der Bohrung und die Fortsetzung des Eindringens des Ansatzstücks in die Bohrung die radiale Ausdehnung der Dichtungen hervorrufen, so daß sie gegen die Wand der Bohrung gedrückt werden, und daß die Dichtungen im nicht komprimierten Zustand einen Außendurchmesser haben, der geringfügig kleiner ist als der Durchmesser der Bohrung.

2. Anschlußvorrichtung nach Anspruch 1, dadurch gekennzeichnet, daß die Dichtungen vor dem Eindringen des Ansatzstückes in die Bohrung durch eine Hülse (26) geschützt werden, die durch elastische Mittel (27) zur gleitenden Muffe gedrückt wird.

3. Vorrichtung nach einem der Ansprüche 1 oder 2, dadurch gekennzeichnet, daß die Schulter (10) des Ansatzstückes eine konische Auflagefläche für die obere Dichtung (8) bildet und daß die Oberfläche (12) der gleitenden Muffe, die in Kontakt mit der unteren Dichtung (9) steht, ebenfalls konisch ist, und daß das untere Ende dieser gleitenden Muffe außerdem eine konische Zentrierschrägung (20) aufweist.

FIG. 1

FIG. 2

# FIG. 3